# EUROPÄISCHE PATENTSCHRIFT

(11) **EP 0 566 926 B1**
(45) Veröffentlichungstag und Bekanntmachung des Hinweises auf die Patenterteilung: **13.12.1995**
(21) Anmeldenummer: 93105663.4
(22) Anmeldetag: 06.04.1993
(51) Int. Cl.: F16H 3/54, B25F 5/00

(54) **Getriebeeinrichtung einer handgeführten Werkzeugmaschine**
Gear unit for a hand-held tool
Dispositif d'engrenage pour outil à main

(30) Priorität: 23.04.1992 DE 4213291
(43) Veröffentlichungstag der Anmeldung: 27.10.1993
(73) Patentinhaber: ATLAS COPCO ELEKTROWERKZEUGE GmbH, D-71364 Winnenden (DE)
(72) Erfinder: Vögele, Roland, Dipl.-Ing. (FH), W-7057 Winnenden (DE)
(74) Vertreter: Gaiser, Hartmut, Dipl.-Ing.

(56) Entgegenhaltungen:
- DE-A- 2 145 009
- DE-A- 3 525 208
- DE-A- 3 526 150

## Beschreibung

Die Erfindung betrifft eine Getriebeeinrichtung entsprechend den Merkmalen im Oberbegriff von Anspruch 1.

Eine derartige Bohrhammermaschine ist unter der Typenbezeichnung PHE 20 RL-MF2 im Firmenkatalog AEG "Elektrowerkzeuge für Handwerk und Industrie" 3/91, Seite 19, 21 gezeigt. Bei dieser sitzt ein verschieblicher Zahnkranzsatz auf der Spindelhülse. Unterschiedliche Zahnräder sind auf der Vorgelegewelle angeordnet. Dieses 2-Ganggetriebe beansprucht vor allem in axialer Richtung an der Spindelhülse vergleichsweise viel Platz. An der Spindelhülse ist eine Sicherheitskupplung vorgesehen. Diese wirkt jedoch nur im ersten Gang. Beim Bohren im zweiten Gang ist der Benutzer also gegen einen Schlag beim Festsitzen des Bohrers nicht geschützt.

In der DE-A1 38 07 308 ist eine Sicherheitskupplung für einen Bohrhammer mit axial geringem Platzbedarf beschrieben. Diese Sicherheitskupplung sitzt zwischen dem Zahnkranz und der Spindelhülse. Ein mehrgängiger Antrieb der Spindelhülse ist hier nicht vorgesehen.

Die DE-A 39 22 357 beschreibt eine Bohrhammermaschine, die mit einem Zweiganggetriebe arbeitet. Dort ist speziell der Hub des Schlagwerks an die jeweilige Drehzahl angepaßt.

Die DE-A 36 36 229 zeigt ein zweistufiges Planetengetriebe bei einer Elektrowerkzeugmaschine, insbesondere einem Schraubendreher. Eine Umschaltbarkeit des Planetengetriebes ist nicht vorgesehen. Statt dessen sind die beiden Planetenträger mit Aufnahmen versehen, in die das jeweilige Werkzeug paßt.

Eine Hammerbohrmaschine, bei der das Schlagwerk im Leerlauf und beim Bohren stillgesetzt ist, ist aus der DE-A 37 32 288 bekannt.

Weiterhin ist aus der DE-A 35 25 208 eine Getriebeanordnung für eine Bohrmaschine bekannt, bei der zwei Gänge über ein axial verschiebbares Hohlrad schaltbar sind. Mittels einer Kugelkupplung kann der Benutzer verschiedene Drehmomente einstellen. Das Getriebe ist ein Planetengetriebe ohne Vorgelegewelle.

Aufgabe der Erfindung ist es, bei einer Getriebeeinrichtung der eingangs genannten Art die Schaltmöglichkeiten baulich und funktionell zu verbessern.

Erfindungsgemäß ist obige Aufgabe bei einer Getriebeeinrichtung der eingangs genannten Art durch die Merkmale des Anspruch 1 gelöst.

Das schaltbare Planetengetriebe führt zu einer Platzersparnis, da sich an der Spindelhülse oder Spindel ein axial verschieblicher Zahnkranzsatz erübrigt. In beiden Gängen wirkt das Planetengetriebe abtriebsseitig auf den Zahnkranz, der zur Gangumschaltung nicht verschoben werden muß.

Durch die Verlagerung der Gangumschaltung in das Planetengetriebe ist auch erreicht, daß eine vorzugsweise zwischen dem vom Planetengetriebe angetriebenen Zahnkranz der Spindelhülse oder Spindel und der Spindelhülse oder Spindel angeordnete Sicherheitskupplung in beiden Gängen in gleicher Weise wirksam ist. Für den Schutz des Benutzers vor Verletzungen ist günstig, daß die Sicherheitskupplung beim Festfressen des Werkzeugs im Werkstück in beiden Gängen bei einem im wesentlichen gleichen Auslösemoment anspricht.

Das auf der Vorgelegewelle sitzende schaltbare Planetengetriebe hat auch den Vorteil, daß nur eine Vorgelegewelle nötig ist. Eine Gangumschaltung mit zwei oder mehr Vorgelegewellen würde einen größeren Bauraum beanspruchen.

Das Planetengetriebe hat außerdem den Vorteil, daß zwischen den beiden Gängen leicht eine vergleichsweise große Übersetzungsspreizung, beispielsweise um etwa den Faktor 3,4 erreichbar ist. Darüber hinaus ist in der Praxis vorteilhaft, daß das Planetengetriebe preisgünstig aufzubauen ist.

Nach der Erfindung greift ein Planetenträger des Planetengetriebes an dem Zahnkranz der Spindelhülse oder Spindel an und ein Hohlrad des Planetengetriebes ist axial verschieblich, wobei es in der ersten Verschiebestellung (1. Gang) gehäusefest blockiert ist und in einer zweiten Verschiebestellung (2. Gang) drehfest mit dem Planetenträger verbunden ist. Zur Gangumschaltung wird hierbei in einfacher Weise das Hohlrad des Planetengetriebes verwendet.

In bevorzugter Ausgestaltung der Erfindung ist für das Hohlrad des Planetengetriebes eine dritte Verschiebestellung vorgesehen, in der die Planetenräder von dem Hohlrad frei sind, und in dieser Stellung ist die Spindelhülse mittels einer Arretiervorrichtung blockierbar. Dadurch ist ein Freilauf für die Vorgelegewelle geschaffen, wobei im Freilauf die Spindelhülse gegen Drehung blockiert werden kann. Dies ist dann günstig, wenn im reinen Hammerbetrieb als Werkzeug beispielsweise ein Flachmeißel eingesetzt ist, der sich beim Hammerbetrieb nicht drehen darf. Die Arretiervorrichtung erfordert keine Vergrößerung der axialen Baulänge, da sie in dem Raum auf der Spindelhülse vorgesehen sein kann, der vom Planetengetriebe im Gegensatz zum bekannten Schaltgetriebe nicht beansprucht ist.

Weitere vorteilhafte Ausgestaltungen der Erfindung ergeben sich aus den Unteransprüchen und der folgenden Beschreibung.

In der Zeichnung zeigen:
Figur 1 einen Längsschnitt einer Getriebeeinrichtung einer Bohrhammermaschine mit drei Schaltstellungen,

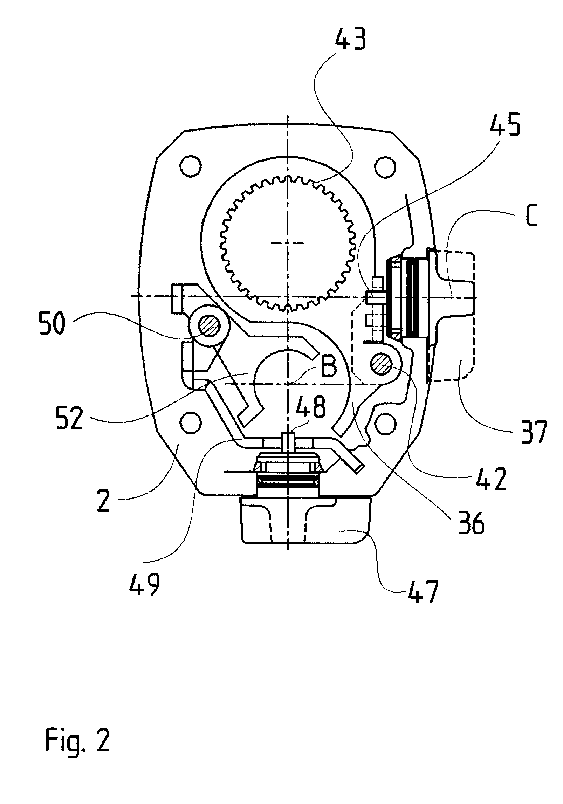

Figur 2 eine Ansicht längs der Linie II-II nach Figur 1 schematisch,
Figur 3 eine Aufsicht längs der Linie III-III nach Figur 1 schematisch, wobei zur Vereinfachung der Darstellung die Bauteile wie in Figur 2 nur teilweise dargestellt sind,
Figur 4 eine Explosionsdarstellung des Planetengetriebes,
Figur 5 eine gegenüber Figur 1 vergrößerte Detailansicht und
Figur 6 eine Ansicht in Richtung des Pfeiles VI nach Figur 5.

Eine Getriebeeinrichtung(1) mit einem Gehäuseteil(2) ist Teil einer elektrischen Bohrhammermaschine. Im Gehäuseteil(2) ist ein Ritzel(3) gelagert, das von der nicht näher dargestellten Welle des Elektromotors der Bohrhammermaschine antreibbar ist.

In das Ritzel(3) greift ein Zahnrad(4) einer Vorgelegewelle(5), die an Lagern(6,7,26) gelagert ist. Die Lager(6,26) sind Nadellager als Radiallager. Das Lager(7) ist ein Axiallager. Zwischen dem Axiallager(7) und dem Radiallager(26) ist ein Federpaket(27) angeordnet. Dadurch, daß das Radiallager(26) direkt neben dem unten näher beschriebenen Planetenträger(21) bzw. dessen Nadellager(24) liegt, sind die Biegemomentbeanspruchungen der Vorgelegewelle(5) herabgesetzt, so daß diese eine vergleichsweise dünne Welle sein kann. An der Vorgelegewelle(5) ist in an sich bekannter Weise ein Taumeltrieb(8) angeordnet, der einem Schlagwerk(9) eine zur Achse(A) axiale Hin- und Herbewegung auf pneumatische Weise vermittelt (vgl. DE 38 07 308 A1). Das Schlagwerk(9) wirkt auf einen Döpper(10), der in einer Döpperführungshülse(11) gelagert ist und ein in eine Werkzeugaufnahme(12) eingespanntes Werkzeug in axialer Richtung (Hammerbetrieb) beaufschlagt.

Koaxial zu dem Schlagwerk(9), dem Döpper(10) und der Döpperführungshülse(11) ist eine Spindelhülse(13) in dem Gehäuseteil(2) drehbar gelagert. Diese ist drehfest mit der Werkzeugaufnahme(12) verbunden bzw. verbindbar.

Auf der Spindelhülse(13) ist ein Zahnkranz(14) drehbar gelagert. Dieser ist über eine Sicherheitskupplung(15) mit der Spindelhülse(13) bis zu einem gewissen Auslösemoment drehfest verbunden. Die Sicherheitskupplung(15) ist beispielsweise eine Rutschkupplung mit Tellerfedern(16).

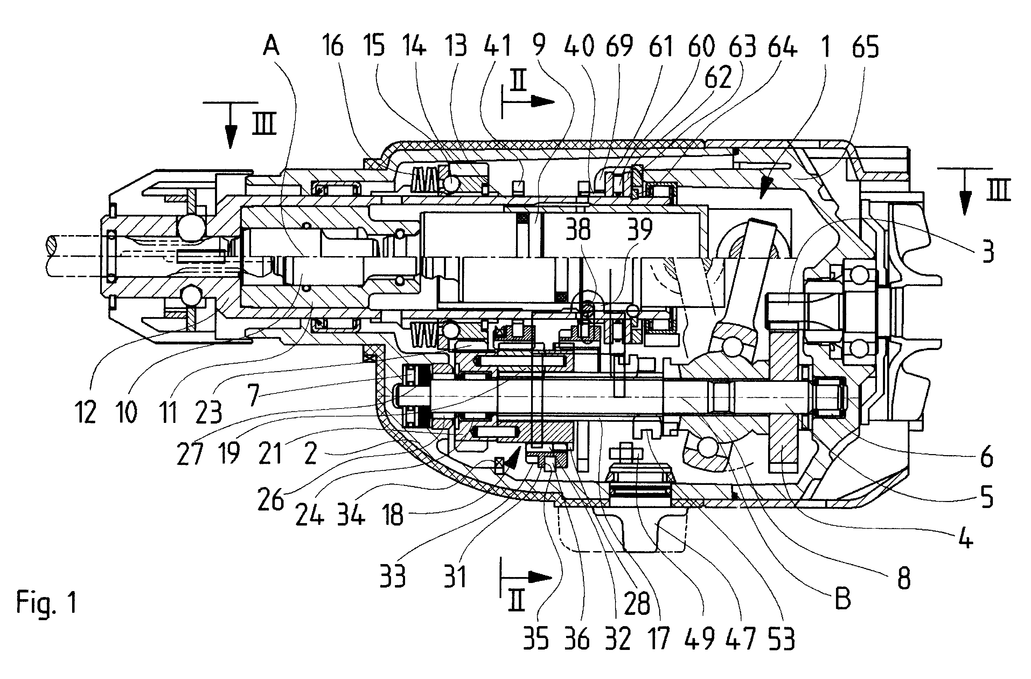

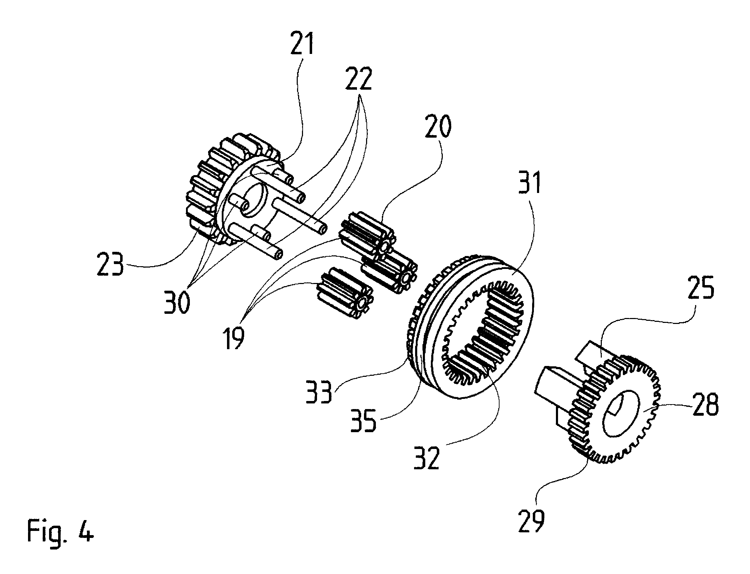

Auf der Vorgelegewelle(5) ist ein Sonnenrad(17) eines Planetengetriebes(18) befestigt. In dieses greifen drei Planetenräder(19) mit ihren Verzahnungen(20) ein. Die Planetenräder(19) sind an einem Planetenträger(21) an Achsen(22) drehbar gelagert. Der Planetenträger(21) weist eine zur Achse(B) der Vorgelegewelle(5) konzentrische Verzahnung(23) auf, die ständig in den Zahnkranz(14) der Spindelhülse(13) eingreift (vgl. Figur 1, Figur 4).

Der Planetenträger(21) ist über ein Nadellager(24) auf der Vorgelegewelle(5) gelagert. Über Segmente(25) zwischen den Achsen(22) bzw. den Planetenrädern(19) sitzt an dem Planetenträger(21) unverdrehbar ein Rad(28), das ebenfalls mit einer Außenverzahnung(29) versehen ist. In die mit dem Rad(28) fest verbundene Segmente(25) sind dabei zwischen den Achsen(22) angeordnete Zapfen(30) des Planetenträgers(21) gesteckt.

Das Planetengetriebe(18) weist außerdem ein Hohlrad(31) auf, das innenseitig mit einer Innenverzahnung(32) versehen ist, die ständig in die Verzahnungen(20) der Planetenräder(19) eingreift. Am Hohlrad(31) ist eine Rastverzahnung(33) ausgebildet, der ein am Gehäuseteil(2) befestigtes Raststück(34) zugeordnet ist (vgl. Fig.4). Außerdem ist das Hohlrad(31) außen mit einer Umfangsnut(35) versehen, in die ein Gangschaltschieber(36) eingreift.

Der Gangschaltschieber(36) ist mittels eines um eine Achse(C) drehbaren Gangschaltgriffes(37) so bewegbar, daß er mittels des Gangschaltschiebers(36) das Hohlrad(31) entweder in dessen linke Stellung (1. Gang) bringt, bei der das Hohlrad(31) mittels seiner Rastverzahnung(33) am Raststück(34) festsitzt, so daß das Hohlrad(31) blockiert ist (vgl. Fig.1 die linke Stellung oberhalb der Achse B), oder der Gangschaltring(37) den Gangschaltschieber(36) und damit das Hohlrad(31) in seine mittlere Stellung bringt (vgl. Fig.1 unterhalb der Achse B), in der das Hohlrad(31) in die Planetenräder(19) und in die Außenverzahnung(29) des Rades(28) greift, so daß dieses am Planetenträger(21) blockiert ist. Dies ist die Stellung des 2. Gangs.

Außerdem kann mittels des Gangschaltgriffes(37) der Gangschaltschieber(36) und damit das Hohlrad(31) in eine rechte Stellung gebracht werden.

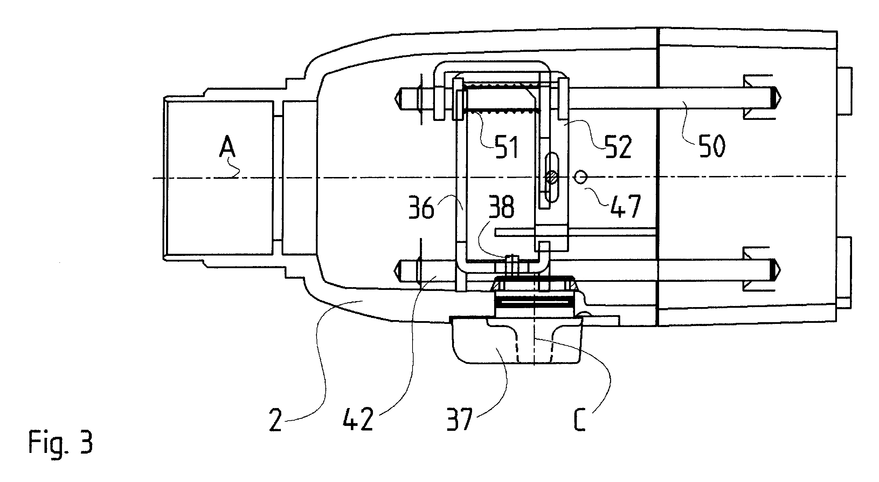

Zur Bewegung des Gangschaltschiebers(36) durch den Gangschaltgriff(37) weist der Gangschaltgriff(37) einen Zapfen(38) auf, der in eine Kulissenführung(39) des Gangschaltschiebers(36) eingreift (vgl. Fig.3).

An der Spindelhülse(13) ist eine Keilwelle(40) drehfest und axial fest angeordnet. Dieser ist ein Arretierschaltschieber(41) zugeordnet, der wie der Gangschaltschieber(36) an einer Achse(42) verschieblich gelagert ist. Der Arretierschaltschieber(41) weist eine der Keilwelle(40) entsprechende Verzahnung(43) auf. Der Arretierschaltschieber(41) ist mittels des Gangschaltgriffes(37) parallel zur Achse(A) verschieblich. Hierfür weist der Gangschaltgriff(37) einen Zapfen(45) auf, der in eine entsprechende Kulissenführung des Arretierschaltschiebers(41) eingreift.

Mittels des Gangschaltgriffes(37) ist der Arretierschaltschieber(41) entweder in eine Stellung zu bringen, in der er links neben der Keilwelle(40) (vgl. Fig.1, linke Stellung) steht und damit wirkungslos ist, oder in eine Stellung zu bringen ist, in der er in die Keilwelle(40) eingreift (vgl. Fig.1, rechte Stellung).

Am Gehäuseteil(2) ist außerdem ein drehbarer Schlagschaltgriff(47) vorgesehen. Dieser greift mit einem Zapfen(48) in einen Schwenkhebel(49), der an einer Achse(50) geführt ist. Mit dem Schwenkhebel(49) steht über eine Feder(51) ein Schaltschieber(52) in Verbindung, der in einen Ring(53) eingreift. Mittels des Rings(53) ist der Taumeltrieb(8) bzw. das Schlagwerk(9) ein- oder ausschaltbar.

Die Funktionsweise der beschriebenen Getriebeeinrichtung ist im wesentlichen folgende:
Steht der Gangschaltgriff(37) in seiner "Arretierstellung", dann greift der Arretierschaltschieber(41) in die Keilwelle(40) ein, wobei das Hohlrad(31) in seiner rechten Stellung steht. Es ist nun der reine Hammerbetrieb, ohne Drehung des Werkzeugs, beispielsweise mit einem Flachmeißel, möglich; unter der Voraussetzung, daß der Schlagschaltgriff(47) auf "Schlagen" gestellt ist.

Wird dann der Gangschaltgriff(37) in seine Stellung für den 1. oder 2. Gang gebracht, dann wird das Hohlrad(31) über den Gangschaltschieber(36) am Raststück(34) (1. Gang) bzw. am Rad(28) (2. Gang) blockiert. Gleichzeitig entfernt sich dabei der Arretierschaltschieber(41) von der Keilwelle(40), so daß die Spindelhülse(13) zur Drehung frei ist. Die Spindelhülse(13) wird nun entsprechend der Übersetzung des Planetengetriebes(18), beispielsweise etwa 1 : 3,4 im 1. Gang bzw. etwa 1 : 1 im 2. Gang angetrieben, wobei die Drehzahl des ersten, langsamen Gangs etwa 700 U/min und die Drehzahl im 2. Gang etwa 2250 U/min beträgt. Die Drehzahl von 700 U/min ist günstig für den Bohrhammerbetrieb. Die Drehzahl von 2250 U/min ist günstig für den reinen Bohrbetrieb, wobei die Gänge nach dem Durchmesser des jeweils eingesetzten Werkzeugs gewählt werden können. Für die Bedienung ist vorteilhaft, daß die drei Stellungen "1. Gang", "2. Gang", "Arretieren der Spindelhülse" allein mit dem Gangschaltgriff(37) einstellbar sind.

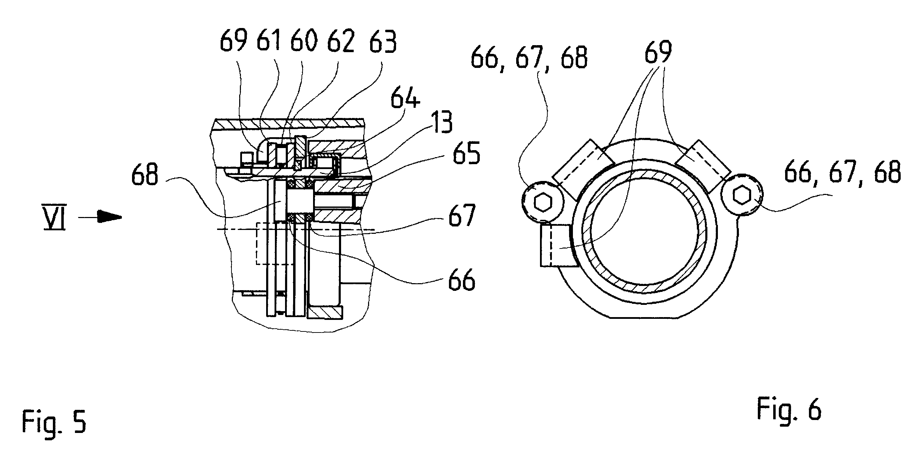

Die Döpperführungshülse(11) sitzt fest in der Spindelhülse(13). Die Spindelhülse(13) ist mittels eines Axiallagers(60) gelagert. Das Axiallager(60) liegt zwischen zwei Scheiben(61,62). Die Scheibe(62) liegt an einem Krallenblech(63) an, das mit Krallen(69) die Scheibe(61) übergreift. Das Krallenblech(63) ist mittels Inbus-Schrauben(68) an einem Lagerschild(65) angeordnet. Dabei ist das Krallenblech(63) beidseitig durch der Rückschlagdämpfung dienende elastische O-Ringe(66,67) abgestützt. Ein auf der Spindelhülse(13) sitzender Ring(64) dient als Anschlag (vgl. Fig.5,6).

Durch diese Anordnung wird der von der Döpperführungshülse(11) auf die Spindelhülse(13) übertragene Rückschlag gedämpft und führt zu einer Schlagverstärkung.

## Patentansprüche

1. Getriebeeinrichtung einer handgeführten Bohrhammermaschine oder Schlagbohrmaschine mit einem Schlagwerk (9), mit einer Sicherheitskupplung (15), mit einer Spindelhülse (13) oder Spindel zum Drehantrieb eines Werkzeughalters und mit einer Vorgelegewelle (5), durch die die Spindelhülse oder Spindel über einen auf dieser angeordneten Zahnkranz (14) antreibbar ist, wobei die Spindelhülse oder Spindel in zwei Gänge schaltbar ist, **dadurch gekennzeichnet,** daß auf der Vorgelegewelle (5) ein Sonnenrad (17) eines schaltbaren Planetengetriebes (18) angeordnet ist, dessen Planetenträger (21) eine zur Vorgelegewelle konzentrische Verzahnung (23) aufweist, die in den Zahnkranz eingreift, und dessen Hohlrad (31) axial verschieblich ist, welches in einer ersten Verschiebestellung (1. Gang) gehäusefest gehalten ist und in einer zweiten Verschiebestellung (2. Gang) drehfest mit dem Planetenträger(21) verbunden ist, wobei die Sicherheitskupplung in beiden Gängen wirksam ist.

2. Getriebeeinrichtung nach Anspruch 1, dadurch gekennzeichnet, daß die Sicherheitskupplung (15) zwischen dem vom Planetengetriebe (18) angetriebenen Zahnkranz (14) und der Spindelhülse (13) oder Spindel angeordnet ist.

3. Getriebeeinrichtung nach einem der vorhergehenden Ansprüche, dadurch gekennzeichnet, daß für das Hohlrad (31) des Planetengetriebes (18) eine dritte Verschiebestellung vorgesehen ist, in der die Planetenräder (19) nicht mit dem Hohlrad (31) kämmen, und daß in dieser Stellung die Spindelhülse (13) oder Spindel mittels einer Arretiervorrichtung (40,41) blockierbar ist.

4. Getriebeeinrichtung nach Anspruch 3, dadurch gekennzeichnet, daß die Arretiervorrichtung eine auf der Spindelhülse (13) oder Spindel befestigte Keilwelle (40) aufweist, in die ein Arretierschaltschieber (41) drehfest einschiebbar ist.

5. Getriebeeinrichtung nach Anspruch 4, dadurch gekennzeichnet, daß ein Gangschaltgriff (37) bei seiner Einstellung in die beiden Gänge den Arretierschaltschieber (41) von der Keilwelle (40) schiebt.

6. Getriebeeinrichtung nach einem der vorhergehenden Ansprüche, dadurch gekennzeichnet, daß ein Axiallager (60) der Spindelhülse (13) oder Spindel mittels elastischer Bauteile (66,67) abgestützt ist.

## Claims

1. Gear unit for a hand-held hammer drill or percussion drill, comprising a percussion mechanism (9), a safety clutch (15), a spindle sleeve (13) or spindle for the rotary drive of a tool holder, and comprising an intermediate shaft (5), by which the spindle sleeve or spindle is drivable via a toothed rim (14) mounted thereon, wherein the spindle sleeve or spindle is shiftable into two gears, characterised in that on the intermediate shaft (5) a sun wheel (17) of a shiftable planetary gear (18) is mounted, its planet carriers (21) having splining (23) concentric to the intermediate shaft and engaging in the toothed rim, its ring gear (31) being axially displaceable in such a manner that it is held rigidly on the housing in a first displacement position (1st gear) and is connected non-rotatably to the planet carrier (21) in a second displacement position (2nd gear), the safety clutch being active in both gears.

2. Gear unit according to claim 1, characterised in that the safety clutch (15) is disposed between the toothed rim (14) driven by the planetary gear (18) and the spindle sleeve (13) or spindle.

3. Gear unit according to one of the preceding claims, characterised in that for the ring gear (31) of the planetary gear (18) a third displacement position is provided in which the planet wheels (19) do not mesh with the ring gear (31), and in that in this position the spindle sleeve (13) or spindle is lockable by means of a locking device (40, 41).

4. Gear unit according to claim 3, characterised in that the locking device has fixed to the spindle sleeve (13) or spindle, a splined shaft (40), into which a lock shifting slide (41) is non-rotatably insertable.

5. Gear unit according to claim 4, characterised in that a gear-shift lever (37), when set in the two gears, pushes the lock shifting slide (41) from the splined shaft (40).

6. Gear unit according to one of the aforesaid claims, characterised in that an axial bearing (60) of the spindle sleeve (13) or spindle is supported by means of resilient components (66, 67).

## Revendications

1. Dispositif d'engrenage d'une perçeuse manuelle à marteau ou perçeuse à percussion comprenant un marteau (9), un accouplement de sécurité (15), une douille de broche (13) ou broche pour l'entraînement en rotation d'un porte-outil et comprenant un arbre de renvoi (5) qui entraîne la douille de broche ou broche par l'intermédiaire d'une couronne dentée (14) disposée sur cette dernière, la douille de broche ou broche étant à deux vitesses, caractérisé en ce que, sur l'arbre de renvoi (5) est disposée une roue solaire (17) d'un engrenage planétaire (18) à changement de vitesse dont la cage de transmission planétaire (21) présente une denture (23) qui est concentrique à l'arbre de renvoi et qui entre en prise avec la couronne dentée, et cet engrenage dont la roue à denture intérieure (31) est coulissante axialement dans une première position coulissée (1ière vitesse) dans laquelle elle est maintenue solidaire du carter et, dans une seconde position coulissée (2ième vitesse), dans laquelle elle est reliée de manière rigide à la torsion à la cage de transmission planétaire (21), l'accouplement de sécurité étant actif dans les deux vitesses.

2. Dispositif d'engrenage selon la revendication 1, caractérisé en ce que l'accouplement de sécurité (15) est disposé entre la couronne dentée (14) entraînée par l'engrenage planétaire (18) et la douille de broche (13) ou broche.

3. Dispositif d'engrenage selon l'une des revendications précédentes, caractérisé en ce qu'il est prévu, pour la roue à denture intérieure (31) de l'engrenage planétaire (18), une troisième position coulissée, dans laquelle les roues satellites (19) ne sont pas en prise avec la roue à denture intérieure (31) et en ce que, dans cette position, la douille de broche (13) ou broche est blocable au moyen d'un dispositif d'arrêt (40, 41).

4. Dispositif d'engrenage selon la revendication 3, caractérisé en ce que le dispositif d'arrêt présente un arbre cannelé (40) fixé sur la douille de broche (13) ou broche, dans lequel est inséré fixement un curseur de commande d'arrêt (41).

5. Dispositif d'engrenage selon la revendication 4, caractérisé en ce qu'une manette de changement de vitesse (37) éloigne de l'arbre cannelé (40), par son réglage dans les deux vitesses, le curseur de commande d'arrêt (41).

6. Dispositif d'engrenage selon l'une des revendications précédentes, caractérisé en ce qu'un palier axial (60) de la douille de broche (13) ou broche est maintenu au moyen de pièces de montage élastiques (66, 67).
